# DEMANDE DE BREVET EUROPEEN

(11) **EP 2 090 461 A1**
(43) Date de publication de la demande: **19.08.2009**
(21) Numéro de dépôt: 09152609.5
(22) Date de dépôt: 11.02.2009
(51) Int. Cl.: B60P 1/00, B65F 3/28

(54) **Benne de transport de matériau divers à bouclier éjecteur**

(30) Priorité: 13.02.2008 FR 0850905
(71) Demandeur: Lagouy, Didier, 38150 Sonnay (FR)
(72) Inventeur: Lagouy, Didier, 38150 Sonnay (FR)
(74) Mandataire: Blanchard, Eugène Gilles

(57) **Abrégé**

L'invention concerne une plate-forme de transport comprenant une structure porteuse (**3**), une benne qui est adaptée sur la structure porteuse (**3**) et qui est délimitée par une paroi allongée concave à bords latéraux relevés et ouverte au niveau d'une extrémité arrière, un bouclier d'éjection (**10**) du contenu de la benne qui est mobile à l'intérieur de la benne en translation longitudinale de direction Δ entre une position de repos (**R**) située vers l'avant de la benne et une position d'éjection maximale située vers l'extrémité arrière, au moins un vérin télescopique principal (**12**), d'axe δ, de manoeuvre en translation du bouclier d'éjection (**10**) jusqu'en position d'éjection maximale qui est interposé entre la structure porteuse (**3**) et le bouclier d'éjection (**10**), **caractérisée en ce qu**'elle comprend en outre des moyens (**13,14**) de modification de l'inclinaison du vérin principal (**12**) adaptés pour placer l'axe δ du vérin principal (**12**), d'une part, en position inclinée par rapport à la direction Δ de translation lorsque le bouclier (**10**) est en position de repos (**R**) et, d'autre part, en position parallèle à la direction Δ lorsque le bouclier d'éjection est en position d'éjection maximale.

## Description

La présente invention concerne le domaine technique des bennes de transport de matériaux divers conçus pour permettre une éjection des matériaux transportés hors de la benne sans relevage de cette dernière au moyen d'un bouclier éjecteur.

Une benne à bouclier éjecteur, telle que par exemple décrite par la demande EP 1 221 398, une paroi allongée concave à bords latéraux relevés adaptée sur une structure porteuse formant le châssis d'un porteur motorisé, d'une semi-remorque ou d'une remorque. La benne qui est ouverte à l'arrière, est équipée d'un bouclier d'éjection mobile en translation longitudinale à l'intérieur de la benne. Le bouclier est manoeuvré par un vérin télescopique double effet d'axe horizontal interposé entre la structure porteuse et le bouclier. Par la commande du vérin télescopique, il est possible de déplacer le bouclier entre une position de repos située vers l'avant de la benne et une position d'éjection maximale située vers l'extrémité arrière de la benne. Afin d'éviter toute perte de matériaux pendant le transport, la benne comprend au niveau de son extrémité arrière une porte pouvant être réalisée de différentes manières quant à sa cinématique d'ouverture et au nombre de vantaux qui la composent.

Une telle benne à bouclier éjecteur donne satisfaction en ce qui concerne sa fonction d'éjection aisée et sans risque de renversement de la charge contenue dans la benne. Toutefois, le bouclier d'éjection et son vérin de manoeuvre créent, en position de repos du bouclier, vers l'avant de la benne ou de la structure porteuse, une zone morte relativement importante qui place le centre de gravité de la charge transportée vers l'arrière de la benne induisant un déséquilibre dans la répartition de la charge sur les essieux du véhicule équipé de la benne. Or, un tel déséquilibre est préjudiciable au comportement routier du véhicule pendant les phases de transferts entre le lieu de chargement et le lieu de déchargement, et contrevient dans certains cas aux réglementations en vigueur.

Il est donc apparu le besoin d'une nouvelle conception de benne éjecteur qui permette, à encombrement équivalent, d'augmenter la charge utile de benne tout en assurant une meilleure répartition de la charge.

Afin d'atteindre cet objectif, l'invention concerne une plateforme de transport comprenant :
■ une structure porteuse,
■ une benne qui est adaptée sur la structure porteuse et qui est délimitée par une paroi allongée concave à bords latéraux relevés et ouverte au niveau d'une extrémité arrière,
■ un bouclier d'éjection du contenu de la benne qui est mobile à l'intérieur de la benne en translation longitudinale de direction Δ entre une position de repos située vers l'avant de la benne et une position d'éjection maximale située vers l'extrémité arrière,
■ au moins un vérin télescopique principal, d'axe δ, de manoeuvre en translation du bouclier d'éjection jusqu'en position d'éjection maximale qui est interposé entre la structure porteuse et le bouclier d'éjection,
■ des moyens de modification de l'inclinaison du vérin principal adaptés pour placer l'axe δ du vérin principal, d'une part, en position inclinée par rapport à la direction Δ de translation lorsque le bouclier est en position de repos et, d'autre part, en position parallèle à la direction Δ pendant la phase active du vérin principal au cours du déplacement du bouclier d'éjection d'une position intermédiaire jusqu'à la position d'éjection maximale du bouclier d'éjection.

Selon l'invention, la plateforme de transport est caractérisée en ce que les moyens de modification de l'inclinaison du vérin principal comprennent :
■ un chariot qui porte une extrémité du vérin et qui est mobile en translation, selon une direction Δ' inclinée par rapport à la direction Δ, le long d'une voie de guidage solidaire de la structure porteuse ou du bouclier, entre une position de repos dans laquelle l'axe δ du vérin principal est incliné et une position de travail dans laquelle l'axe δ du vérin principal est parallèle à la direction Δ,
■ des moyens moteurs adaptés pour entraîner un déplacement du chariot entre sa position de repos et sa position de travail, lesdits moyens moteurs comprenant au moins un vérin télescopique secondaire dont le corps est lié à la structure porteuse et dont la tige télescopique est adaptée pour exercer une poussée sur le bouclier d'éjection.

La mise en oeuvre des moyens de modification de l'inclinaison du vérin principal permet, par l'inclinaison du vérin principal, d'avancer la position de repos du bouclier, ce qui entraîne une avancée du centre de gravité de la charge transportée et permet, à longueur hors tout équivalente, une augmentation de volume utile de la benne.

Selon l'invention, le vérin principal peut être réalisé de toute façon appropriée et dans une forme préférée de réalisation, le vérin principal comprend :
■ un corps qui est lié à la structure porteuse,
■ et une tige télescopique dont la tête est liée au bouclier d'éjection et qui est mobile entre une position de rétraction et une position d'extension.

De même, selon l'invention, la modification de l'inclinaison de l'invention peut être réalisée de différentes manières comme par exemple en adaptant l'arrière du corps du vérin sur un berceau oscillant et en agissant sur le corps au moyen d'un vérin secondaire pour modifier l'inclinaison du vérin principal.

Dans le cadre de l'invention, la direction de translation est susceptible de connaître différentes orientations selon la configuration d'implantation notamment. Dans une variante préférée de mise en oeuvre visant à réduire l'encombrement du système au repos, la direction Δ'de translation du chariot est sensiblement perpendiculaire à la direction Δ de translation du bouclier.

Dans le même but et selon un mode de réalisation préférée, le chariot porte l'extrémité avant du corps du vérin principal et se trouve mobile en translation sensiblement verticale, le long de la voie de guidage solidaire de la structure porteuse, entre la position de repos haute dans laquelle l'axe δ du vérin principal est incliné et la position de travail basse dans laquelle l'axe δ du vérin principal est parallèle à la direction Δ.

Selon la forme de réalisation préférée, les moyens moteurs sont adaptés pour assurer le mouvement du chariot par un déplacement du bouclier d'éjection depuis sa position de repos jusqu'à une position intermédiaire dans laquelle le chariot est en position de travail, la tige télescopique du vérin principal étant en position de rétraction.

Selon l'invention les moyens moteurs peuvent être réalisés de toute façon appropriée. Selon une caractéristique de l'invention, les moyens de modification de l'inclinaison du vérin principal comprennent au moins une, de préférence au moins deux glissières verticales solidaires du bouclier et recevant les extrémités d'une barre de guidage montée coulissante dans les glissières et étant solidaire de l'extrémité arrière du vérin principal.

Dans une forme de réalisation préférée, les moyens moteurs comprennent deux vérins télescopiques secondaires disposés de part et d'autre du vérin télescopique principal.

Selon une autre caractéristique de l'invention, les moyens moteurs sont adaptés pour ramener le chariot en position de repos à partir de sa position de travail. A cet effet, les moyens moteurs comprennent par exemple un treuil adapté pour amener le chariot en position de repos à partir de sa position de travail. Il peut également être envisagé des moyens moteurs assurant le déplacement du chariot dans les deux sens comme par exemple un système à vis ou à chaîne ou encore un vérin hydraulique double effet.

Selon une autre caractéristique de l'invention visant à réduire les coûts de revient et le poids du vérin télescopique principal, ce dernier est un vérin hydraulique simple effet, et il est mis en oeuvre des moyens de rappel du bouclier en position de repos.

Selon une caractéristique de l'invention, les moyens de rappel du bouclier en position de repos comprennent au moins un treuil.

Selon une autre caractéristique de l'invention, les moyens de rappel intègrent les moyens moteurs de déplacement du chariot et comprennent, par exemple, un treuil dont le câble ou la sangle est fixé au bouclier pour ensuite être déviée par une poulie de renvoi solidaire du chariot et, soit venir s'enrouler sur le treuil fixé à la structure porteuse à proximité de la position de repos du chariot, soit être déviée par une seconde poulie de renvoi solidaire de la structure porteuse à proximité de la position de repos du chariot pour ensuite s'enrouler sur le treuil fixé en partie basse de la structure porteuse.

Dans une variante préférée de réalisation, les moyens de rappel peuvent intégrer, outre les moyens moteurs de déplacement du chariot, un treuil fixé, de préférence, en partie basse de la structure porteuse et apte à enrouler par un brin un câble ou une sangle mouflée sur le bouclier d'éjection par au moins une poulie de mouflage, l'autre brin du câble ou sangle étant lui fixé sur le corps du vérin principal.

L'invention concerne également un véhicule pour le transport et l'éjection de matériau, notamment véhicule porteur motorisé, remorque ou semi-remorque, d'une plate-forme de transport selon l'invention.

Bien entendu, les différentes caractéristiques de l'invention évoquées ci-dessus peuvent être mises en oeuvre les unes avec les autres selon différentes combinaisons lorsqu'elles ne sont pas incompatibles ou exclusives les unes des autres.

Par ailleurs, diverses autres caractéristiques de l'invention ressortent de la description faite ci-dessous en référence aux dessins annexés qui montrent, à titre d'exemples non limitatifs, des formes de réalisation de l'objet de l'invention.
La **fig. 1** est une vue en élévation schématique d'un véhicule porteur motorisé équipé d'une plateforme de transport selon l'invention.
La **fig. 2** est une vue schématique de dessus de la plateforme représentée à la **fig. 1****.**
Les **fig. 3** et **5** sont des vues analogues à la **fig. 1** montrant différentes phases de fonctionnement du bouclier d'éjection.
Les **fig. 4** et **6** sont des vues de dessus analogues à la **fig. 2** et correspondant aux **fig. 3** et **5**.
La **fig. 7** est une vue analogue à la **fig. 3** montrant une variante de réalisation des moyens mis en oeuvre pour ramener le bouclier éjecteur en position de rétractation ;
La **fig. 8A** à **8C** représentent en vue de côté une plateforme de transport pour un véhicule de type semi-remorque, incorporant une autre variante de réalisation de moyens de rappel du bouclier d'éjection par un câble ou une sangle mouflée sur le bouclier ;
Les **fig. 9A** à **9C** représentent en vue de côté une plateforme de transport pour un véhicule de type semi-remorque dans laquelle les deux extrémités du vérin principal sont mobiles en translation verticale dans des voix de guidage solidaires de la structure porteuse et du bouclier respectivement.

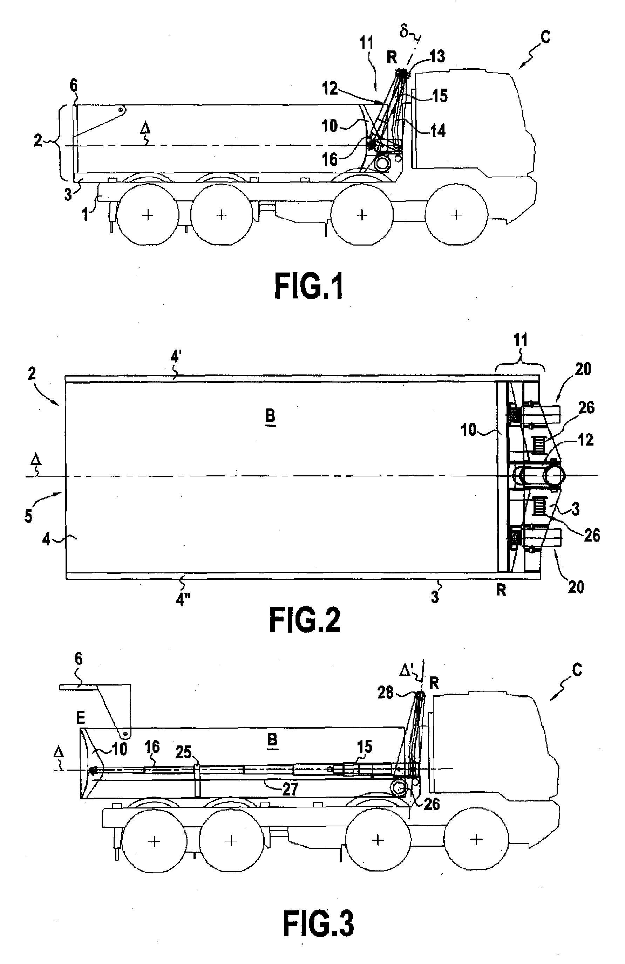

Un véhicule porteur motorisé **C** selon l'invention comprend un châssis **1** sur lequel est adaptée une plate-forme de transport conforme à l'invention et désignée dans son ensemble par la référence **2**, comme cela ressort des **fig. 1** et **2**.

Une telle plate-forme de transport **2** comprend une structure porteuse **3** sur laquelle est adaptée une paroi allongée concave **4** dont les bords latéraux **4**' et **4**" sont relevés pour définir une benne **B** ouverte au même niveau de son extrémité arrière **5**. Selon l'exemple illustré, afin d'assurer une fermeture temporaire de l'extrémité arrière **5**, la benne **B** est équipée d'une porte redevable **6**, étant entendu que tout autre type de porte pourrait être envisagé pour assurer la fermeture de l'extrémité arrière **5** de la benne **B**.

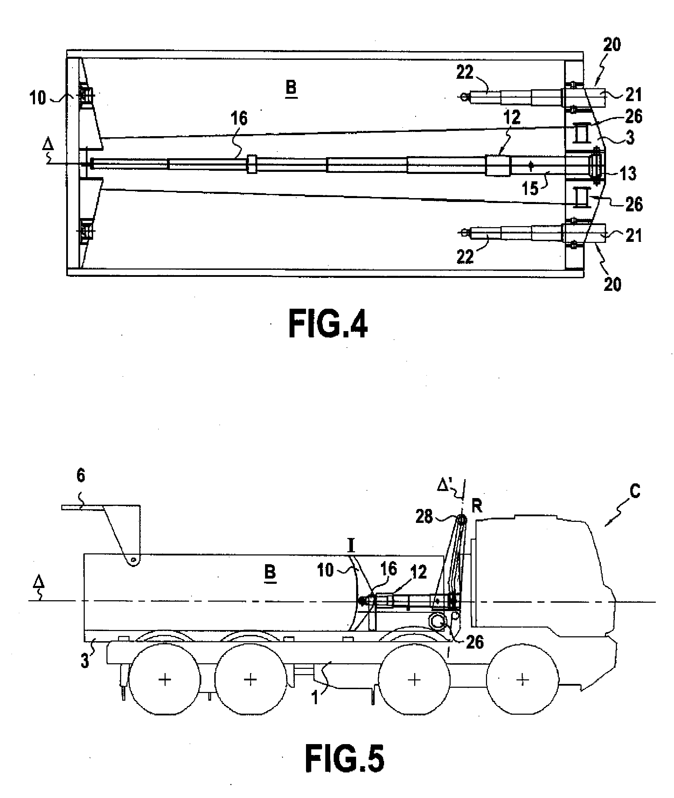

La forme particulière de la paroi **4** peut être variée dans la mesure où elle permet d'assurer sa fonction de stockage temporaire et de transport de matériaux divers. De manière générale, la paroi **4** présente une section droite transversale en « U » de forme constante sur toute la longueur utile de la benne **B**, de manière à permettre la mise en oeuvre d'un bouclier éjecteur **10** qui autorise un vidage de la benne **B** sans qu'il soit nécessaire de relever cette dernière. Le bouclier éjecteur **10** présente alors une forme ou un contour complémentaire de la section droite transversale de la benne **B**. Le bouclier éjecteur **10** est alors mobile en translation longitudinale d'axe Δ entre une position de repos **R**, telle qu'illustrée aux **fig. 1** et **2**, et une position d'éjection maximale **E**, telle qu'illustrée aux **fig. 3** et **4**. Afin de faciliter ce mouvement, le bouclier éjecteur **10** peut éventuellement être associé à des moyens de guidages longitudinaux solidaires des bords latéraux relevés **4**' et **4**". Le déplacement du bouclier éjecteur **10** entre sa position de repos **R** et sa position d'éjection maximale **E** est assuré par des moyens de manoeuvre **11** qui comprennent au moins un et, selon l'exemple illustré, exactement un vérin télescopique principal **12** interposé entre le bouclier **10** et la structure porteuse **3**.

Conformément à une caractéristique essentielle de l'invention, l'inclinaison du vérin principal **12** est modifiée entre la position de repos **R** et la position intermédiaire **I** du bouclier d'éjection **10**, en position de repos **R**, l'axe δ du vérin principal **12** étant incliné par rapport à la direction Δ tandis qu'entre la position intermédiaire **I** et la position d'éjection maximale **E** l'axe δ est parallèle à la direction Δ. Cette modification de l'inclinaison de l'axe δ du vérin principal **12** permet, en position de repos **R**, de réduire l'encombrement du vérin principal **12** en projection sur l'axe longitudinal Δ de la benne **B** et donc d'augmenter la longueur utile de la benne B par rapport à la longueur utile résultant d'un maintien de l'axe δ du vérin principal parallèle à la direction de translation en position de repos.

Afin de permettre la mise en oeuvre de ces caractéristiques essentielles de l'invention, la plate-forme de transport **2** comprend, selon l'exemple illustré, en tant que moyen de modification de l'inclinaison du vérin principal **12**, un chariot **13** mobile en translation de direction Δ' le long d'une voie de guidage **14** solidaire de la structure porteuse **3** entre une position de repos **R**, illustrée **fig. 1****,** et une position de travail **T** représentée **fig. 3** et **5**. La direction Δ' de la voie de guidage **14** est inclinée par rapport à la direction de translation Δ et, selon l'exemple illustré, s'inscrit dans un plan vertical sensiblement perpendiculaire à la direction de translation Δ dans sa partie basse. L'extrémité avant du corps **15** du vérin principal **12** est alors fixée au chariot **13** tandis que l'extrémité arrière ou tête de la tige télescopique **16** du vérin principal **12** est liée au bouclier d'éjection **10**. Le déplacement du chariot **13** depuis sa position de repos **R** jusqu'à sa position de travail **T** est assuré par des moyens moteurs qui, selon l'exemple illustré, comprennent deux vérins secondaires **20**, de course et donc d'encombrement réduit, disposés de part et d'autre du vérin principal **12**. Le corps **21** de chaque vérin secondaire **20** est solidaire de la structure porteuse **3** tandis que l'extrémité de leur tige **22** est adaptée pour exercer une poussée sur le bouclier **10** selon une direction sensiblement parallèle à la direction longitudinale Δ.

La plate-forme de transport **2** selon l'invention et ainsi constituée, est mise en oeuvre de la manière suivante. Lorsque l'on souhaite vider le contenu de la benne sans relever cette dernière, la porte arrière **6** est ouverte comme illustré à la **fig. 5****.** Ensuite, l'extension des vérins secondaires **20** est commandée de manière à pousser le bouclier d'éjection **10** jusque dans une position intermédiaire **I** telle qu'illustrée à la **fig. 5**. Le déplacement du bouclier d'éjection **10** assuré par les vérins secondaires **20** entraîne une descente du chariot **13** depuis sa position de repos **R** jusqu'à la position de travail **T**. Les vérins secondaires **20** sont, bien entendu, dimensionnés de manière à disposer d'une puissance suffisante pour déplacer la charge de matériau contenue par la benne. Au cours du mouvement assuré par les vérins secondaires **20**, la tige **16** du vérin principal **12** reste en position de rétraction telle qu'illustrée aux **fig. 1,2****,** **5** et **6** et l'axe δ du vérin principal **12** passe de sa position inclinée à une position horizontale parallèle à la direction Δ de translation du bouclier **10**.

À partir de la position intermédiaire **I** du bouclier d'éjection, l'extension de la tige télescopique **16** du vérin principal **12** est commandée de manière à faire passer le bouclier d'éjection de sa position intermédiaire à sa position d'éjection maximale **E** telle qu'illustrée **fig. 3** et **4**. Il pourra être remarqué que l'un des segments de la tige télescopique **16** porte une jambe de force **25** destinée à limiter la flexion de la tige lorsque cette dernière est en extension maximale. Dans cette position **E** du bouclier d'éjection **10,** l'intégralité du contenu de la benne **B** a été évacué et il est alors nécessaire de replacer le bouclier d'éjection **10** dans sa position de repos **R** afin de pouvoir remplir à nouveau la benne **B**. Le retour du bouclier **10** à sa position intermédiaire **I** peut être assuré par le vérin principal **12** dans la mesure où ce dernier est un vérin double effet. Toutefois, dans une forme préférée de réalisation visant à améliorer l'efficacité du vérin **12** pendant la phase d'éjection ainsi que réduire son poids et les coûts de fabrication de la plate-forme **2**, le vérin principal **12** est un vérin simple effet et le déplacement en retour du bouclier d'éjection est assuré par des moyens de rappel comprenant, selon l'exemple illustré, deux treuils **26** disposés de part et d'autre du vérin principal **12**. Le câble **27** ou analogue de chacun des treuils **26** est fixé au bouclier d'éjection **10**. Lors du mouvement aller du bouclier **10**, de sa position de repos **R** à sa position d'éjection maximale **E**, les câbles **27** se déroulent librement. Ensuite, le mouvement de retour du bouclier d'éjection **10** est assuré par l'enroulement des câbles **27** sur les treuils **26,** ce qui amène le bouclier d'éjection **10** jusqu'à sa position intermédiaire **I**, la tige **16** du vérin télescopique principal **12** étant alors ramenée en position de rétraction.

Un treuil secondaire **28**, faisant partie des moyens moteurs associés au chariot **13**, assure alors la remontée du chariot **13** et de l'extrémité correspondante du corps **15** du vérin principal **12** pour placer ledit vérin principal 12 dans sa position inclinée correspondant aux positions de repos **R** du chariot **13** et du bouclier **10**. Le fonctionnement simultané des treuils **26** avec le treuil secondaire **28** permet d'assurer la rétraction des tiges télescopiques des vérins secondaires **20**. Ainsi, la mise en oeuvre de treuils pour assurer le rappel du bouclier d'éjection **10** ainsi que du chariot **13** permet d'utiliser des vérins simple effet et donc de réduire considérablement la masse des vérins ainsi que leur coût.

Bien entendu, le déplacement du chariot **13** pourrait être assuré autrement qu'au moyen d'un treuil, et, par exemple, au moyen d'un système de vis sans fin ou crémaillère ou encore d'un vérin double effet.

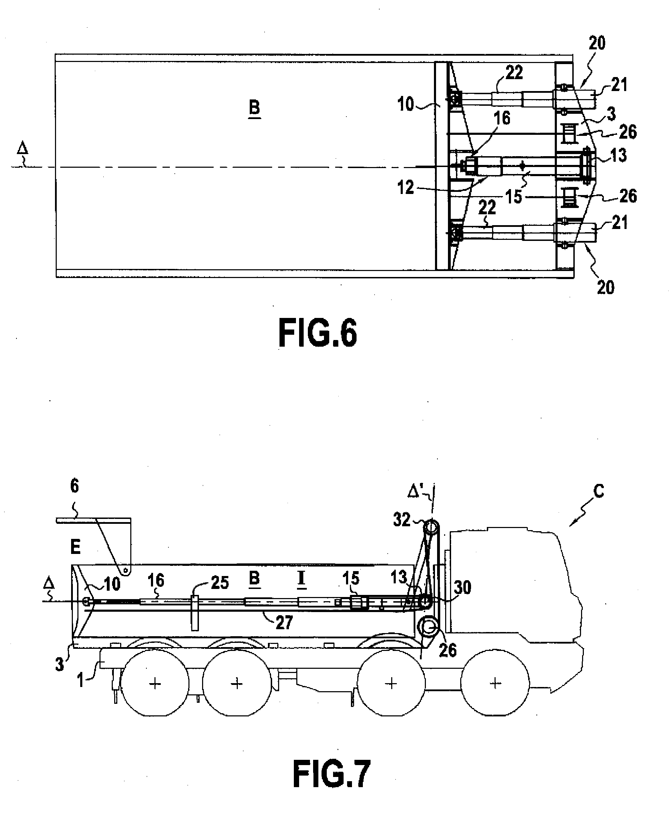

Selon l'exemple de réalisation décrit précédemment, les moyens de rappel du bouclier et les moyens moteurs du chariot sont dissociés. Toutefois selon l'invention, les moyens de rappel et les moyens moteurs peuvent également être intégrés comme le montre la **Fig. 7****.** Selon cette forme de réalisation, le câble ou analogue **27** est fixé au bouclier éjecteur **10** pour ensuite être dévié par une première poulie **30,** solidaire du chariot **13,** puis par une seconde poulie **32**, solidaire de la structure porteuse **3** en étant situé à proximité de la position de repos **R**. Le câble **27** est ensuite pris en charge par le treuil **26,** également solidaire de la structure porteuse **3**. Le système fonctionne alors de la manière suivante. À partir de la position d'éjection **E,** la traction sur le câble **27** entraîne une rétraction du vérin **15** jusqu'en position intermédiaire **I**. Une fois dans cette position intermédiaire, la traction sur le câble **27** entraîne un soulèvement de la poulie **30** de sorte que le chariot **13** est amené progressivement en position de repos **R**. Ainsi, ce montage permet de mettre un seul treuil ou ensemble de treuils pour assurer à la fois la rétractation du vérin **15** et la remontée du chariot **13.**

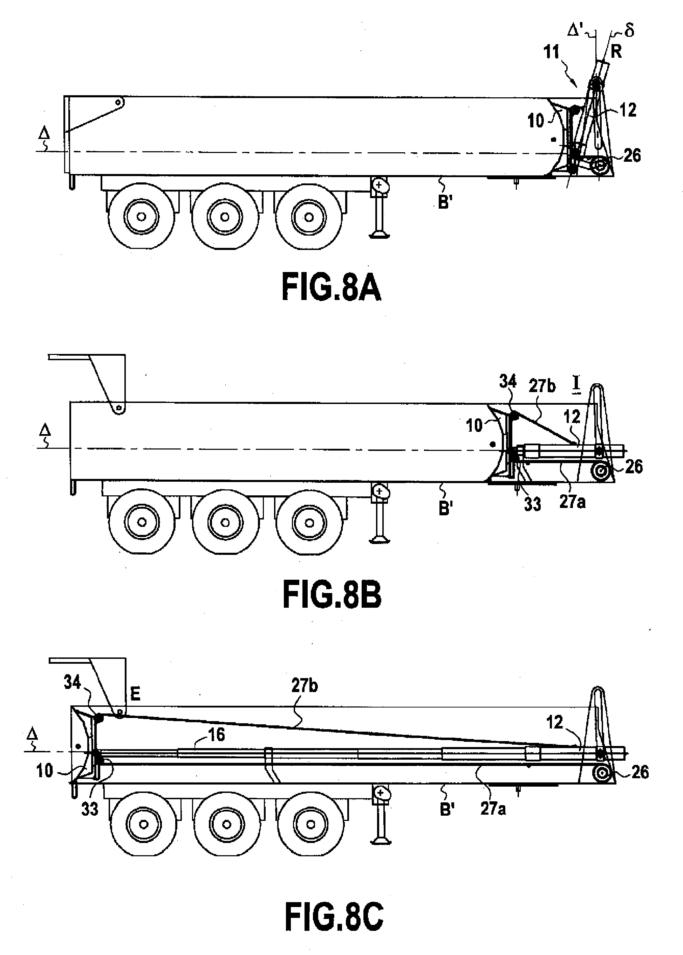

Les figures **8A** à **8C** représente une plateforme de transport comprenant une benne **B'** de semi-remorque équipée d'un bouclier éjecteur **10** coopérant avec un vérin principal **12** de mobilisation et des moyens de modification de l'inclinaison du vérin tels que précédemment décrits. Le bouclier éjecteur **10** ainsi que le vérin principal **12** coopèrent alors également avec des moyens de rappel formant une variante de réalisation de ceux présentés à la figure **7**.

Dans cette variante, les moyens de rappel comportent au moins un câble ou au moins une sangle **27** mouflée sur le bouclier éjecteur **10** solidaire par un premier brin **27a** d'au moins un treuil de rappel **26** porté sur la structure porteuse de la benne et par un second brin **27b** du corps du vérin principal **12.** La sangle **27** est mouflée sur le bouclier éjecteur **10** par l'intermédiaire d'au moins une, et de préférence comme représenté au moins deux poulies de mouflage **33, 34** fixées sur la paroi postérieure du bouclier éjecteur **10** et formant ainsi des éléments de renvoi et de démultiplication du câble ou sangle **27** de rappel entre le brin **27b** rattaché au corps du vérin principal et le brin **27a** solidaire du treuil **26.** De préférence, la poulie de mouflage **34** est fixée sur la partie supérieure du bouclier **10** à distance de son point d'accouplement au vérin principal pour des raisons qui seront explicités par la suite.

Dans cette configuration, le bouclier éjecteur **10** est déplacé normalement, comme précédemment décrit depuis sa position de repos **R** (**fig. 8A**) jusqu'à à sa position d'éjection **E** (**fig. 8C****)** en passant par la position intermédiaire **I** (**fig. 8B**) par déploiement du vérin principal **12,** assisté le cas échéant de vérins secondaires non représentés pour le passage de la position de repos **R** à la position intermédiaire **I**. Le câble ou la sangle de rappel **27** est alors déroulé du treuil **26** au fur et à mesure de l'avancée du bouclier éjecteur **10** jusqu'à la position d'éjection maximale **E** dans laquelle la sangle est intégralement déroulée comme représenté à la **fig. 8C****.**

Pour ensuite ramener le bouclier éjecteur **10** à la position de repos R, le treuil **26** est mis en fonction pour enrouler progressivement le câble ou la sangle de rappel **27** par le brin **27a** dont il est solidaire. L'autre brin de sangle **27b** étant solidaire du corps du vérin **12**, qui est fixe, cet enroulement sur le treuil **26** provoque une traction du bouclier éjecteur **10** qui est transmise de la sangle **27** au bouclier **10** par l'intermédiaire des poulies de mouflage **33, 34,** entrainant ainsi le repli du vérin principal **12** et du bouclier **10** jusqu'à la position intermédiaire **I**, puis de la position intermédiaire **I** à la position de repos **R**.

Il convient ici de noter l'avantage de cette configuration de moyens de rappel pour le retour du vérin **12** à la position de repos **R**. En effet, la poulie de mouflage **34** fixée sur la partie supérieure du bouclier **10** imprime sous l'action du treuil **26** à la portion de sangle de rappel **27b** un effort de traction dirigé selon l'axe de cette portion de sangle et qui tend à provoquer un relèvement de la partie avant **15** du vérin **12** par basculement du vérin à son extrémité arrière au niveau de son point d'accouplement au bouclier **10.** Cet effort de traction du brin de sangle **27b** entre le vérin et la poulie de mouflage **34** facilite l'engagement du mouvement de remonté du chariot mobile **13** dans les voies de guidage **14** qui permet le redressement du vérin principal **12** jusqu'à la position de repos **R**, ce qui permet une moindre sollicitation des moyens moteurs associés au chariot **13.**

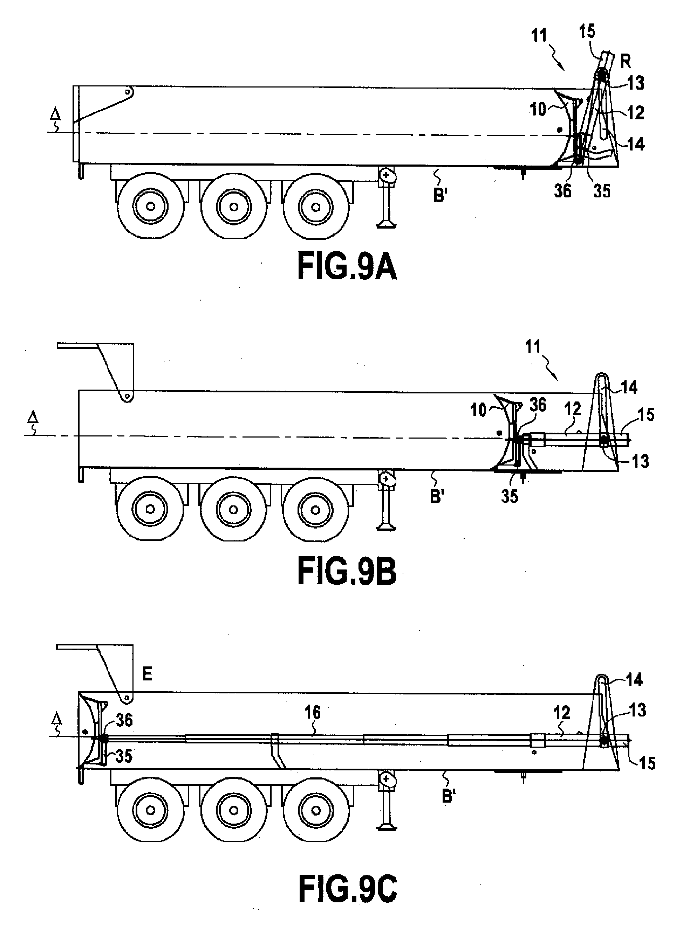

Conformément à une autre caractéristique particulière de l'invention, on peut également prévoir pour éviter un encombrement vertical, ou le cas échéant latéral, trop important du vérin principal **12** en position de repos de réaliser un accouplement glissant de l'extrémité arrière du vérin sur la partie postérieure du bouclier éjecteur **10,** en particulier selon une technique similaire à celle employée pour mobiliser la partie avant **15** du vérin dans des voies de guidage **14.** Un tel montage glissant de la partie arrière du vérin principal sur le bouclier peut s'avérer particulièrement utile pour des plateformes de transport de type semi-remorque, dont un exemple particulier de réalisation est présenté aux **figures 9A** à **9C****,** sur lesquelles les moyens de rappel précédemment décrits n'ont pas été reproduits par souci de clarté.

Tel que montré sur les figures 9A à 9C, la paroi postérieure du bouclier éjecteur **10** est pourvue d'au moins une, et de préférence deux glissières **35** verticales recevant à coulissement les extrémités d'une barre de guidage **36,** ou en variante d'un chariot similaire au chariot **13,** de laquelle est solidaire l'extrémité arrière du vérin principal **12.** Ainsi, dans la position de repos **R** telle que représentée à la **fig. 9A****,** la barre de guidage **36** se trouve en butée en bas des glissières **35,** ce qui permet d'avoir l'extrémité arrière du vérin principal **12** sensiblement plaquée contre le fond de la benne **B'**, ce qui limite la hauteur de dépassement de son extrémité avant **15** au dessus de la benne.

Puis, lors de la mise en oeuvre du bouclier éjecteur **10,** celui-ci est dans un premier temps amené par abaissement de la partie avant **15** du vérin **12** à l'aide du chariot **13** dans les voies de guidage **14** jusqu'à la position intermédiaire **I** représentée à la **fig. 9B****.**

Lors de ce passage de la position de repos **R** à la position intermédiaire **I,** la barre de guidage **36** effectue dans les glissières **35** un mouvement de translation de sens contraire de celui du chariot **13** des les voies de guidage **14,** jusqu'à venir en butée contre l'extrémité supérieure des glissières **35** provoquant ainsi un alignement des extrémités avant **15** et arrière du vérin **12** selon l'axe longitudinal **Δ** de la plateforme. Le vérin principal **12** se trouve ainsi alors dans une position appropriée au déploiement de sa tige télescopique **16** pour amener le bouclier **10** jusqu'à la position d'éjection maximale **E**, la barre de guidage **36** restant en position haute en butée contre l'extrémité supérieure des glissières **35** entre les positions intermédiaire **I** et maximale **E** du bouclier.

Bien entendu, diverses autres modifications peuvent être apportées à l'invention sans sortir de son cadre.

## Revendications

1. Plate-forme de transport comprenant :
■ une structure porteuse (**3**),
■ une benne (**B,B'**) qui est adaptée sur la structure porteuse (**3**) et qui est délimitée par une paroi allongée (**4**) concave à bords latéraux (**4',4"**) relevés et ouverte au niveau d'une extrémité arrière (**5**),
■ un bouclier (**10**) d'éjection du contenu de la benne (**B**) qui est mobile à l'intérieur de la benne (**B, B'**) en translation longitudinale de direction Δ entre une position de repos (**R**) située vers l'avant de la benne (**B,B'**) et une position d'éjection maximale (**E**) située vers l'extrémité arrière (**5**),
■ au moins un vérin télescopique principal (**12**), d'axe δ, de manoeuvre en translation du bouclier d'éjection (**10**) jusqu'en position d'éjection maximale (**E**) qui est interposé entre la structure porteuse (**3**) et le bouclier d'éjection (**10**),
■ des moyens **(13,14,20,28,35,36)** de modification de l'inclinaison du vérin principal (**12**) adaptés pour placer l'axe δ du vérin principal (**12**), d'une part, en position inclinée par rapport à la direction Δ de translation lorsque le bouclier (**10**) est en position de repos (R) et, d'autre part, en position parallèle à la direction Δ pendant la phase active du vérin principal au cours du déplacement du bouclier d'éjection d'une position intermédiaire (I) jusqu'à la position d'éjection maximale (E) du bouclier d'éjection (**10**),
**caractérisée en ce que** les moyens de modification de l'inclinaison du vérin principal comprennent :
■ un chariot (**13**) qui porte une extrémité du vérin (**12**) et qui est mobile en translation, selon une direction Δ' inclinée par rapport à la direction Δ, le long d'une voie de guidage (**14**) solidaire de la structure porteuse (**3**) ou du bouclier, entre une position de repos (**R**) dans laquelle l'axe δ du vérin principal (**12**) est incliné et une position de travail (**T**) dans laquelle l'axe δ du vérin principal (**12**) est parallèle à la direction Δ,
■ des moyens moteurs (**20,28**) adaptés pour entraîner un déplacement du chariot (**13**) entre sa position de repos (**R**) et sa position de travail (**T**), lesdits moyens moteurs comprenant au moins un vérin télescopique secondaire (**20**) dont le corps est lié à la structure porteuse (**3**) et dont la tige télescopique (**22**) est adaptée pour exercer une poussée sur le bouclier d'éjection (**10**).

2. Plate-forme de transport selon la revendication 1, **caractérisée en ce que :**
■ le vérin principal (**12**) comprend :
■ un corps (**15**) qui est lié à la structure porteuse (**3**)
■ et une tige télescopique (**16**) dont la tête est liée au bouclier d'éjection (**10**) et qui est mobile entre une position de rétraction et une position d'extension,

3. Plate-forme de transport selon la revendication 1 ou 2, **caractérisée en ce que** la direction Δ' de translation du chariot (**13**) est sensiblement perpendiculaire à la direction Δ de translation du bouclier (**10**).

4. Plate-forme de transport selon l'une des revendications 1 à 3, **caractérisée en ce que** le chariot (**13**) porte l'extrémité avant du corps (**15**) du vérin principal (**12**) et se trouve mobile en translation, le long de la voie de guidage (**14**) solidaire de la structure porteuse (**3**), entre la position de repos haute (**R**) dans laquelle l'axe δ du vérin principal est incliné et la position de travail basse (**T**) dans laquelle l'axe δ du vérin principal est parallèle à la direction Δ.

5. Plate-forme de transport selon l'une des revendications 1 à 4, **caractérisée en ce que** les moyens moteurs (**20**) sont adaptés pour assurer le mouvement du chariot (**13**) par un déplacement du bouclier d'éjection (**10**) depuis sa position de repos (**R**) jusqu'à une position intermédiaire (**I**) dans laquelle le chariot (**13**) est en position de travail (**T**), la tige télescopique (**16**) du vérin principal (**12**) étant en position de rétraction.

6. Plateforme selon l'une des revendications 1 à 5, **caractérisée en ce que** les moyens de modification de l'inclinaison du vérin principal comprennent au moins une, de préférence au moins deux glissières (**35**) verticales solidaires du bouclier (**10**) et recevant les extrémités d'une barre de guidage (**36**) montée coulissante dans les glissières et étant solidaire de l'extrémité arrière du vérin principal.

7. Plate-forme de transport selon l'une des revendications 1 à 6, **caractérisée en ce que** les moyens moteurs comprennent deux vérins télescopiques secondaires (**20**) disposés de part et d'autre du vérin télescopique principal (**12**).

8. Plate-forme de transport selon l'une des revendications 1 à 7, **caractérisée en ce que** les moyens moteurs (**20,28**) sont adaptés pour ramener le chariot (**13**) en position de repos (**R**) à partir de sa position de travail (**T**).

9. Plate-forme de transport selon la revendication 8, **caractérisée en ce que** les moyens moteurs comprennent un treuil (**28**) adapté pour amener le chariot en position de repos (**R**) à partir de sa position de travail (**T**).

10. Plate-forme de transport selon l'une des revendications 1 à 9, **caractérisée en ce que** le vérin télescopique principal (**12**) est un vérin hydraulique simple effet, et **en ce qu'**elle comprend des moyens (**26**) de rappel du bouclier (**10**) en position de repos (**R**).

11. Plate-forme transport selon la revendication 10, **caractérisée en ce que** les moyens de rappel du bouclier (**10**) en position de repos (**R**) comprennent au moins un treuil (**26**).

12. Plate-forme de transport selon la revendication 10 et l'une des revendications 1 à 7, **caractérisée en ce que** les moyens de rappel (**26, 27**) intègrent les moyens moteurs de déplacement du chariot (**13**).

13. Plate-forme de transport selon la revendication 12, **caractérisée en ce que** les moyens de rappel comprennent un treuil (**26**) dont le câble (**27**) est fixé au bouclier pour ensuite être dévié par une poulie de renvoi (**30**) solidaire du chariot (**13**) et, soit venir s'enrouler sur le treuil (**26**) fixé à la structure porteuse (**3**) à proximité de la position de repos (**R**) du chariot, soit être dévié par une seconde poulie de renvoi (**32**) solidaire de la structure porteuse (**3**) pour ensuite s'enrouler sur le treuil (**26**) fixé en partie basse de la structure porteuse.

14. Plate-forme de transport selon la revendication 10, **caractérisée en ce que** les moyens de rappel comprennent, outre les moyens moteurs de déplacement du chariot, un treuil (**26**) fixé, de préférence, en partie basse de la structure porteuse et apte à enrouler par un brin **(27a)** un câble ou une sangle (**27**) mouflée sur le bouclier d'éjection (**10**) par au moins une poulie de mouflage (**33, 34**), un autre brin (**27b**) du câble ou sangle étant lui fixé sur le corps du vérin principal (**12**).

15. Véhicule pour le transport et l'éjection de matériau, notamment véhicule porteur motorisé, remorque ou semi-remorque, **caractérisé en ce qu'**il est équipé d'une plate-forme de transport (**2**) selon l'une des revendications 1 à 15.
